# EUROPÄISCHE PATENTSCHRIFT

(11) **EP 0 278 399 B1**
(45) Veröffentlichungstag und Bekanntmachung des Hinweises auf die Patenterteilung: **12.01.1994**
(21) Anmeldenummer: 88101614.1
(22) Anmeldetag: 04.02.1988
(51) Int. Cl.: B29C 49/02

(54) **Vorrichtung zum Herstellen eines Kunststoff-Hohlkörpers mit einer Ringdüse**
Apparatus with an annular orifice for the manufacture of a hollow plastics body
Dispositif à base annulaire pour la fabrication d'un corps creux en matière plastique

(30) Priorität: 12.02.1987 DE 3704266
(43) Veröffentlichungstag der Anmeldung: 17.08.1988
(73) Patentinhaber: OSSBERGER-TURBINENFABRIK GMBH & CO., 91781 Weissenburg (DE)
(72) Erfinder: LINSS, Gerhard, D-8832 Weissenburg/Bayern (DE); OSSBERGER, Karl-Friedrich, D-8832 Weissenburg/Bayern (DE)
(74) Vertreter: Böhme, Volker, Dipl.-Ing.

(56) Entgegenhaltungen:
- DE-A- 2 528 964
- GB-A- 943 748
- US-A- 2 982 993
- US-A- 3 329 996
- US-A- 3 343 210
- US-A- 3 466 701

## Beschreibung

Die Erfindung betrifft eine Vorrichtung zum Herstellen eines Hohlkörpers aus thermoplastischem Kunststoff mit einem durch Spritzgießen geformten Kopfstück und einem durch Blasen eines daran einstückig anschließenden Rohrabschnittes geformten Körperteil, bei der eine Ringdüse in einem Düsenmundstück einen hin- und herverschiebbaren Düsenkegel aufweist, der mit dem Düsenmundstück eine ringspaltartige Düsenöffnung begrenzt, bei der gegenüber der Ringdüse eine Abzugseinrichtung mit einer Ausnehmung für das Kopfstück in axialer Richtung hin- und herverschiebbar angeordnet ist, bei der Blasformteile einer mehrteiligen Blasform seitlich hin- und herbewegbar sind und bei der eine Blaseinrichtung bei geschlossener Blasform den gezogenen Rohrabschnitt aufbläst, wobei eine Steuereinrichtung vorgesehen ist und die Düsenöffnung im Durchfluß variabel sowie schließbar steuerbar ist.

Bei einer bekannten (US-A-3 343 210) Vorrichtung dieser Art ist der Ringspalt der Ringdüse im Querschnitt in Spritzrichtung gleichbleibend, weshalb Düsenmundstück und Düsenkegel in Schließstellung entlang einer Fläche gegeneinanderdrücken. Auch ist der gezogene Rohrabschnitt ringdüsenseitig bei geschlossener Düsenöffnung von Ansätzen von Bodenstücken der Blasformteile zusammen - und abgequetscht, weshalb das Ende des Rohrabschnittes nicht oder nur wenig gehalten ist. Diese Gestaltung führt in der Praxis zu Ausschuß und Beschränkung der Einsatzmöglichkeit der Vorrichtung.

Eine Aufgabe der Erfindung ist es daher, eine Vorrichtung der eingangs genannten Art zu schaffen, die mittels einer bezüglich der Ringdüse vorgesehenen Änderung eine Verringerung an Ausschuß und eine Erweiterung der Einsatzmöglichkeit vorsieht und bei welcher der Rohrabschnitt nach seiner Herstellung und bei geschlossener Blasform ringdüsenseitig in verbesserter Weise festgehalten ist. Die erfindungsgemäße Vorrichtung weist, diese Aufgabe lösend, die kennzeichnenden Merkmale des Patentanspruchs 1 auf.

Bei der erfindungsgemäßen Vorrichtung sind Verbesserungen bezüglich des herzustellenden Hohlkörpers durch Änderungen erreicht, welche sich auf den Schließvorgang der Ringdüse beziehen. Durch die zusätzliche, die Schließung der Düsenöffnung betreffende Einrichtung lassen sich der herzustellende Rohrabschnitt und der daraus geblasene Körperteil dahingehend verbessern, daß Ausschuß, der durch Mängel der Ringdüse bedingt ist, und Beschränkung der Einsatzmöglichkeit, die durch die Wirkung der Ringdüse bedingt ist, in einem beachtlichen Maß vermindert sind.

Bei der erfindungsgemäßen Vorrichtung wird die Kunststoffzufuhr unterbrochen, bevor die Abzugseinrichtung den vollen Abzugshub durchfahren hat, und wird zumindest ein Teil des Abzugshubes ohne entsprechenden Kunststoffnachschub aus der Düsenöffnung durchfahren, so daß sich der ausgezogene Rohrabschnitt längt bzw. dehnt, wobei sich der Außendurchmesser und die Wandstärke vermindern. Hierbei ist die Düsenöffnung geöffnet, so daß der Rohrabschnitt mit dem in der Ringdüse befindlichen Kunststoff einstückig ist und von diesem festgehalten ist. Dieser feste Halt widersteht auch der elastischen Zusammenziehungskraft, welche der Rohrabschnitt bzw. Schlauch aufgrund der Dehnung entwickelt. Sofort unmittelbar nach dem Aufblasen, wenn der Hohlkörper sich geformt hat, und noch unter Aufblasdruck steht, wird der Rohrabschnitt abgeschert. Solange der Hohlkörper noch warm ist, ist die Zusammenziehungskraft wirksam und durch den Aufblasdruck kompensiert. Der Luftdruck wird weggenommen, wenn Kühlung erfolgt ist und dadurch die Zusammenziehungskraft unwirksam geworden ist.

Es ist auch eine Vorrichtung erwünscht, bei der die Möglichkeit des Gegeneinanderdrückens von Düsenmundstück und Düsenkegel bei Schließstellung beseitigt ist. Dies ist erreicht, wenn der bei vorgeschobenem Düsenkegel mit der Schließkante des Düsenmundstückes zusammenwirkende Bereich des Düsenkegels als zylindrischer Abschnitt ausgebildet ist.

Bei Schließung der Ringdüse paßt der zylindrische Bereich des Düsenkegels genau in die Schließkante des Düsenmundstückes, ohne mit Druck an der Schließkante anzuliegen. Durch das Vermeiden dieses Druckes werden Kunststoffablagerungen am Düsenmundstück und/oder Düsenkegel vermieden, die zu rundumlaufenden Ringeindrücken am abgezogenen Rohrabschnitt führen, welche die Qualität des herzustellenden Hohlkörpers mindern. Das Einschieben des zylindrischen Bereiches in die ringförmige Schließkante hat eine abstreifende, reinigende Wirkung. Ein Auswechseln von Düsenmundstück und Düsenkegel zwecks Beseitigung der Ablagerungen ist vermieden.

Düsenmundstück und Düsenkegel sind in jedem Fall auswechselbar eingebaut, um bei Abnutzung oder für eine Änderung der Düsenöffnung ausgewechselt werden zu können. Wenn das Einsetzen von Düsenmundstück und Düsenkegel nicht genau genug erfolgt, so besteht bei einer Ringlinienberührung entweder Bruchgefahr oder die Gefahr eines Restspaltes bei Schließstellung. Auch diese nachteiligen Verhältnisse sind durch den zylindrischen Abschnitt des Düsenkegels vermieden, der ein Spiel bei der Stellung des schließenden Düsenkegels zuläßt, der verschieden weit vorgeschoben werden kann.

Der durch Passung des zylindrischen Abschnittes in der Schließkante gegebene Verschluß der Düsenöffnung ist dicht genug, da er nur den Ladedruck und nicht den Preßdruck der kunststoffzuführenden Fördereinrichtung auszuhalten hat. Die Schaltung und Betriebsweise der erfindungsgemäßen Vorrichtung erfolgen so, daß die Düsenöffnung nicht geschlossen wird, solange Preßdruck eingestellt ist. Der Ladedruck ist der Druck, mit dem der Preßeinrichtung, die z.B. ein hin- und hergehender Kolben ist, Kunststoff für einen Preßhub zugeführt wird.

Besonders zweckmäßig und vorteilhaft ist es, wenn der zylindrische Abschnitt nach vorne hin in einen konischen Abschnitt des Düsenkegels übergeht, der zu dem seitlich daneben verlaufenden Abschnitt des Düsenmundstückes unter gleichem Neigungswinkel parallel ist. Der Kunststoff wird also bei geöffneter Düsenöffnung auf der letzten Wegstrecke in einen Kanal gleichbleibenden Querschnittes geführt.

Besonders zweckmäßig und vorteilhaft ist es weiterhin, wenn die Länge des zylindrischen Abschnittes in etwa gleich der Hubhöhe des Düsenkegels zwischen Offenstellung und Geschlossenstellung ist. Diese Länge des zylindrischen Abschnittes genügt, um ein einbaubedingtes Spiel auszugleichen und die erwünschte Reinigungswirkung zu erzielen.

Besonders zweckmäßig und vorteilhaft ist es sodann, wenn eine kunststoffzuführende Fördereinrichtung mit einer ladenden Schnecke und einem pressenden Kolben vorgesehen ist. Eine solche an sich bekannte Einrichtung zur Erzeugung von Ladedruck und Preßdruck ist für den Düsenöffnungsverschluß durch Passung des zylindrischen Abschnittes gut geeignet.

Da die Blasform den Durchgang zur Ringdüse nicht absperren darf, lassen sich mit der erfindungsgemäßen Vorrichtung nur Hohlkörper mit durchbrochenem Boden herstellen. Die Dehnung läßt sich auch erreichen, indem die Abzugsgeschwindigkeit der Abzugseinrichtung größer gestaltet wird, als es der Menge an aus der Düsenöffnung austretendem Kunststoff entspricht. Das Quetschen und die damit verbundene elliptische Querschnittsform entfallen. Somit entfallen auch die damit verbundenen Wanddickenunregelmäßigkeiten im unteren Hohlkörperbereich.

Die Erfindung ist primär für die Verarbeitung solcher Kunststoffe gedacht, deren elastische Dehnung bzw. deren elastische Zusammenziehungskraft nicht vernachlässigbar gering, sondern erheblich ist. Kunststoffe, die bei Schlauchdehnung beachtliche elastische Zusammenziehungskräfte entwickeln, sind z.B. Polyester- und Polyurethan-Elastomere. Geeignet sind hochmolekulares Polyethylen sowie thermoplastischer Gummi, z.B. Santopren.

Besonders zweckmäßig und vorteilhaft ist es, wenn die geschlossene Blasform von der Düsenöffnung einen zumindest geringen Abstand aufweist. Es kann der Boden der Blasformteile den Kunststoff nicht gegen den vorragenden Düsenkegel drücken, d.h. das Ankleben am Düsenkegel ist vermieden.

Besonders zweckmäßig und vorteilhaft ist es dann, wenn die Steuereinrichtung für eine langsame Abnahme der Kunststoffzufuhr in Relation zur Abzugsgeschwindigkeit bzw. für eine langsame Zunahme der Abzugesgeschwindigkeit in Relation zur Kunststoffzufuhr während des Ziehens des Rohrabschnittes ausgelegt ist. Es wird also nicht während des gesamten Ziehens des Rohrabschnittes dieser gleichmäßig gedehnt und es wird auch nicht erst gegen Ende des Ziehvorganges eine Dehnung durchgeführt. Vielmehr wird der Rohrabschnitt am Anfang des Ziehvorganges nicht und zum Ende des Ziehvorganges hin immer stärker gedehnt. Hierdurch wird die Dehnung besser auf den gesamten Rohrabschnitt verteilt.

Besonders zweckmäßig und vorteilhaft ist es ebenfalls, wenn ein die Blasluft zulassendes Ventil und ein die Düsenöffnung abscherend schließendes Ventil gleichzeitig angesteuert sind. Da der Schließvorgang Zeit erfordert, ist die Dusenöffnung noch etwas geöffnet, wenn der Blasvorgang erfolgt. Es wird mit dem Ansteuern des Schließvorganges nicht gewartet, bis der Blasvorgang beendet ist, wodurch die Arbeit der Vorrichtung beschleunigt wird.

In der Zeichnung ist eine bevorzugte Ausführungsform der Erfindung dargestellt und zeigt
- Fig. 1: schematisch einen vertikalen Schnitt einer Vorrichtung zum Herstellen eines Kunststoff-Hohlkörpers mit einer Ringdüse,
- Fig. 2: wesentliche Teile der Vorrichtung gemäß Fig. 1 in einer gegenüber Fig. 1 vergrößerten Darstellung, in einer ersten Betriebsstellung,
- Fig. 3: die Vorrichtung gemäß Fig. 2 in einer zweiten Betriebsstellung,
- Fig. 4: die Vorrichtung gemäß Fig. 2 in einer dritten Betriebsstellung und
- Fig. 5: die Vorrichtung gemäß Fig. 2 in einer vierten Betriebsstellung und
- Fig. 6: in einem gegenüber Fig. 1 vergrößerten Maßstab und im Schnitt eine zu der Vorrichtung gemäß Fig. 1 gehörende Einrichtung zum Nachschub von Kunststoff.

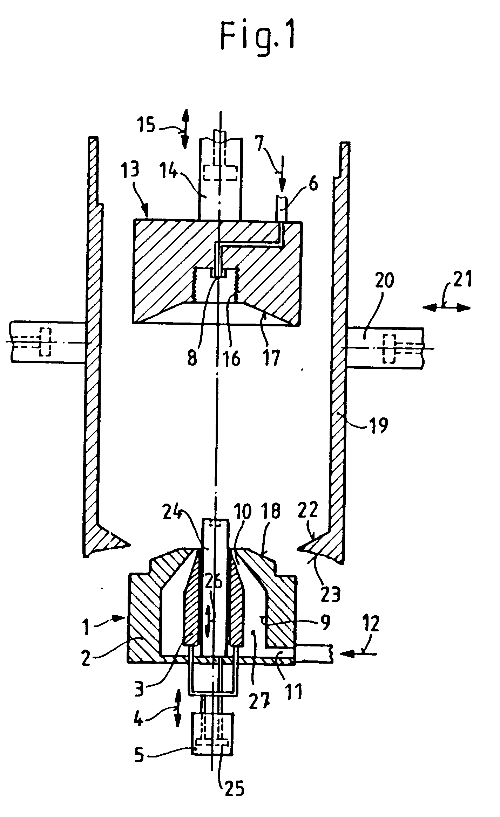

Die Vorrichtung gemäß Fig. 1 bis 5 besitzt eine Ringdüse 1, die ein ortsfestes Düsenmundstück 2 umfaßt, in dem ein Düsenkegel 3 gemäß einem Doppelpfeil 4 mittels einer Kolben-Zylinder-Einrichtung 5 hin- und herbewegbar ist. Der Düsenkegel 3 und das Düsenmundstück 2 begrenzen zwischen sich einen Ringkanal 9, der nach vorne in eine ringspaltartige Düsenöffnung 10 übergeht und dem von hinten über eine Rohrleitung 11 gemäß einem Pfeil 12 thermoplastischer Kunststoff zugeführt wird. Zur Düsenöffnung 10 hin ist der Düsenkegel 3 unter einem geringeren Winkel konisch als die Innenwand des Düsenmundstückes, so daß die Düsenöffnung 10 abgesperrt wird, wenn der Düsenkegel 3 nach vorne geschoben wird. In dem Düsenkegel 3 ist ein Dorn 24 mittels einer Kolben-Zylinder-Einrichtung 25 gemäß einem Doppelpfeil 26 hin- und herverschiebbar, so daß das vordere Endstück aus dem Düsenkegel herausschiebbar ist um in einer weiter unten erörterten Ausnehmung 16 ein Kopfstück eines herzustellenden Hohlkörpers zu formen.

Oberhalb der Ringdüse 1 ist eine Abzugseinrichtung 13 vorgesehen, die mittels einer Kolben-Zylinder-Einrichtung 14 gemäß einem Doppelpfeil 15 hin- und herbewegbar ist und nach unten hin eine Ausnehmung 16 mit Hinterschnitt bzw. Hintergriff bildet. Weshalb die Abzugseinrichtung in nicht näher gezeigter Weise teilbar und wieder zusammensetzbar ist. Die Abzugseinrichtung 13 weist eine radial schräg geneigte kreisringartige Auflagefläche 17 auf, die einer Stirnfläche 18 des Düsenmundstückes 2 angepaßt entspricht. Der Abzugseinrichtung 13 bzw. der Ausnehmung 16 wird von hinten über eine Rohrleitung 6 gemäß einem Pfeil 7 Druckluft zugeführt, welche die Abzugseinrichtung in der Ausnehmung durch eine mittig angeordnete Blasöffnung 8 verläßt.

Beiderseits der Ringdüse 1 und der Abzugseinrichtung 13 ist je ein Blasformteil 19 einer zweiteiligen Blasform vorgesehen, das mittels einer Kolben-Zylinder-Einrichtung 20 gemäß einem Doppelpfeil 21 hin- und herbewegbar ist. Jedes Blasformteil 19 ist mit einem Bodenstück 22 versehen, das mit einer schrägen Auflagefläche 23 auf der Sitzfläche 18 des Düsenmundstückes 2 aufsitzen kann.

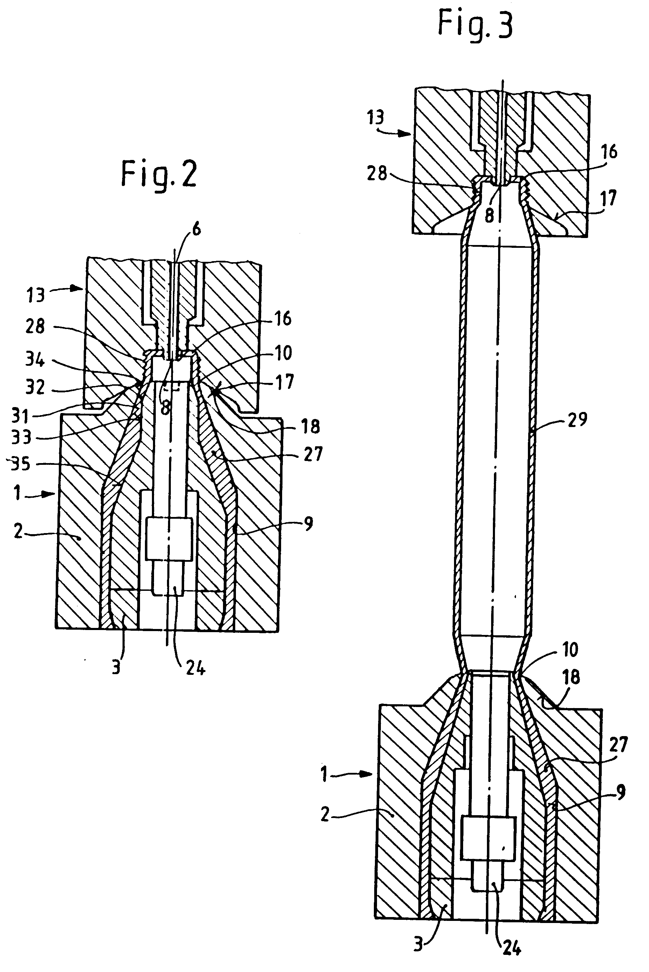

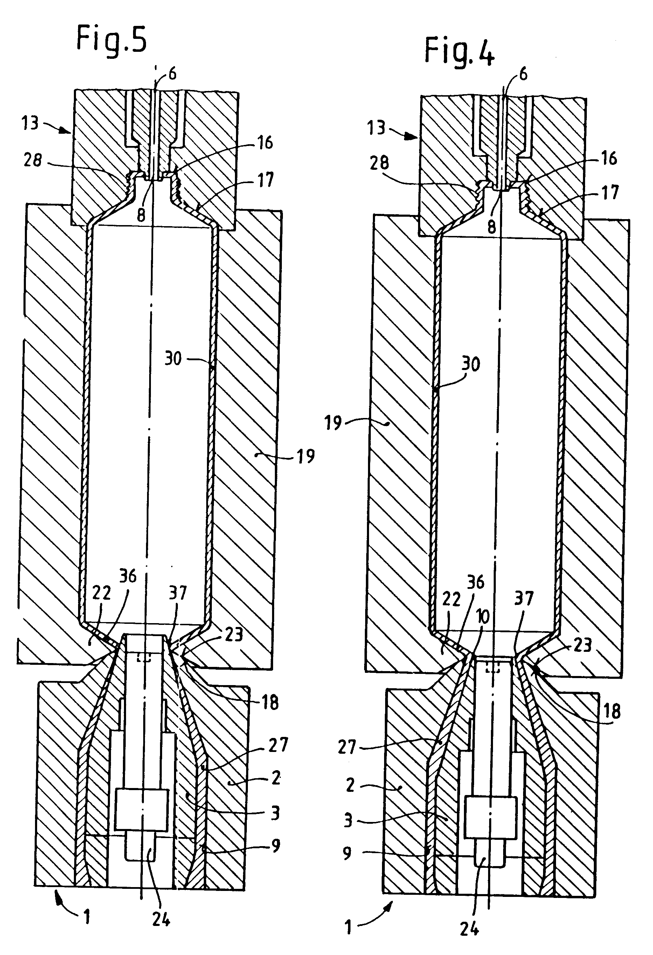

Die Arbeitsweise der Vorrichtung ergibt sich auch aus Fig. 2 bis 5. Zunächst wird gemäß Fig. 2 die Abzugseinrichtung 13 auf die Ringdüse 1 aufgesetzt, wobei das herausragende Endstück des Dornes 24 in die Ausnehmung 16 ragt. Sodann wird Kunststoff 27 durch die voll geöffnete Düsenöffnung 10 in die Ausnehmung 16 gespritzt, so daß ein Kopfstück 28 entsteht. Gemäß Fig. 2 ist das Endstück des Dornes 24 aus dem bereits erkalteten Kopfstück 29 wieder zurückgezogen. Gemäß Fig. 3 wird ein Rohrabschnitt 29 gezogen, indem aus der teilweise geschlossenen Düsenöffnung 10 Kunststoff gepreßt wird und die Abzugseinrichtung 13 von der Ringdüse 1 wegbewegt wird. Beim Auspressen wird Stützluft eingeblasen und entspannt sich der in der Düse zusammengepreßte Kunststoff, weshalb der Durchmesser des ausgepreßten Rohrabschnittes 29 größer als die Düsenöffnung 10 ist. Gemäß Fig. 4 werden die Blasformteile 19 zu einer Blasform geschlossen und wird der Rohrabschnitt 29 zu einem Körperteil 30 aufgeblasen, wobei die Düsenöffnung noch offen ist. Gemäß Fig. 5 wird die Düsenöffnung 10 geschlossen und das der Ringdüse zugeordnete Ende des Körperteiles 30 von dem Kunststoff 27 in der Ringdüse 1 getrennt.

Gemäß Fig. 2 ist der Ringspalt 31, der in der Düsenöffnung 10 endet, von der Außenwandung des Düsenkegels 3 und der konischen Innenwandung des Düsenmundstückes 2 begrenzt. Dabei bildet die Außenwandung des Düsenkegels 3, von vorne nach hinten gesehen, zunächst einen Abschnitt 32, der konisch und parallel zur Innenwandung des Düsenmundstückes 2 ist. Daran schließt sich ein zylindrischer Abschnitt 33 an, der genau in die die Düsenöffnung außen umrandende Schließkante 34 des Düsenmundstückes paßt. Daran schließt sich ein konischer Abschnitt 35 an, der parallel zu der konischen Innenwand des Düsenmundstückes 2 verläuft, von dieser aber einen größeren Abstand besitzt als der Bereich 32.

Gemäß Fig. 4 und 5 enden die Bodenstücke 22 der zusammengeschobenen Blasformteile 19 außerhalb der Düsenöffnung 10 bzw. der Schließkante 34. Somit kann das vordere Endstück des Düsenkegels 3 voll zwischen den Bodenstücken 22 gemäß Fig. 5 hindurchtreten. Der hergestellte Körperteil 30 besitzt einen Boden 36, der mittig einen Durchbruch 37 aufweist.

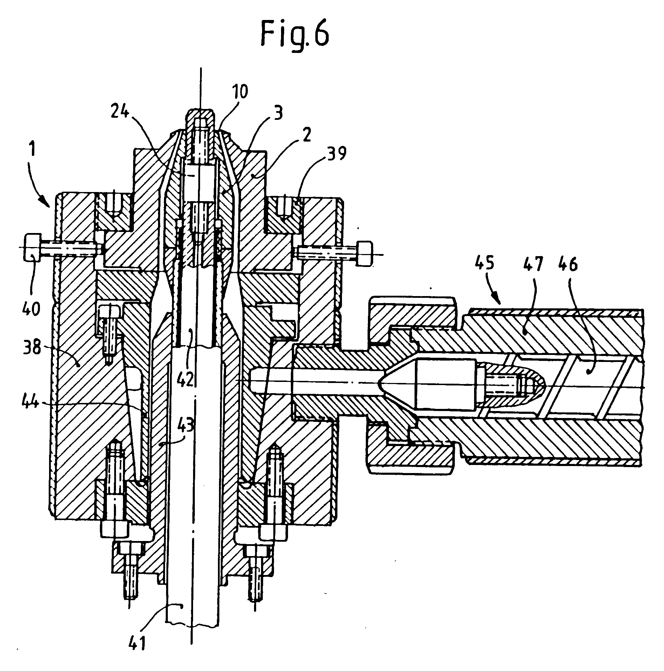

Fig. 6 verdeutlicht, wie bei der Ringdüse 1 das Düsenmundstück 2 auswechselbar in einem Grundkörper 38 eingesetzt ist und mittels eines Gewinderinges 39 gehalten ist. Mit Zentrierschrauben 40 wird die Stellung des Düsenmundstückes 2 einjustiert. Der Düsenkegel 3 läßt sich einfach auswechseln, da er auf eine hohle Kolbenstange 41 geschraubt ist, die zu der Kolben-Zylinder-Einrichtung 5 gehört. Die hohle Kolbenstange 41 nimmt eine Kolbenstange 42 auf, die den Dorn 24 trägt und zu der Kolben-Zylinder-Einrichtung 25 gehört.

Die hohle Kolbenstange 41 ist umschlossen von einem Preßkolben 43, an dem unten eine nicht gezeigte Kolben-Zylinder-Einrichtung angreift und der in einem Speicherkopf 44 hin- und herbewegbar ist. An den Speicherkopf 44 ist ein Schneckenförderer 45 angeschlossen, der eine Schnecke 46 in einem Führungsrohr 47 aufweist. Die Schnecke 46 fördert laufend Kunststoff mit Ladedruck in den Speicherkopf 44. Wenn dieser bei zurückgezogenem Preßkolben 43 gefüllt ist, kann der Preßkolben einen Arbeitshub ausführen, um Kunststoff auszuspritzen. Wenn der Preßkolben sich nicht nach vorne bzw. oben bewegt, ist die Kunststoffzufuhr zur Düsenöffnung 10 unterbrochen.

## Patentansprüche

1. Vorrichtung zum Herstellen eines Hohlkörpers aus thermoplastischem Kunststoff mit einem durch Spritzgießen geformten Kopfstück (28) und einem durch Blasen eines daran einstückig anschließenden Rohrabschnittes (29) geformten Körperteil (30), bei der eine Ringdüse (1) in einem Düsenmundstück (2) einem hin- und herverschiebbaren Düsenkegel (3) aufweist, der mit dem Düsenmundstück (2) eine ringspaltartige Düsenöffnung (10) begrenzt, bei der gegenüber der Ringdüse (1) eine Abzugseinrichtung (13) mit einer Ausnehmung (16) für das Kopfstück (28) in axialer Richtung hin- und herverschiebbar angeordnet ist, bei der Blasformteile (19) einer mehrteiligen Blasform seitlich hin- und herbewegbar sind und bei der eine Blaseinrichtung (8) bei geschlossener Blasform den gezogenen Rohrabschnitt (29) aufbläst, wobei eine Steuereinrichtung vorgesehen ist und die Düsenöffnung (10) im Durchfluß variabel sowie schließbar steuerbar ist, **dadurch gekennzeichnet**, daß die geschlossene Blasform die Düsenöffnung (10) für den Durchgang des Rohrabschnittes (29) in die Blasform frei läßt, daß die Steuereinrichtung für eine Dehnung des ausgepreßten Rohrabschnittes (29) mittels der abziehenden Abzugseinrichtung (13) bei gedrosselter oder unter brochener Kunststoffzufuhr ausgebildet ist, und daß die Steuereinrichtung derart ausgebildet ist, daß die Düsenöffnung (10) bis zum Beginn des Blasvorganges geöffnet in Offenstellung gesteuert sowie nach Beginn das Blasvorganges bei unter Druck stehendem Hohlkörper abscherend geschlossen gesteuert ist.

2. Vorrichtung nach Ansprüch 1, **dadurch gekennzeichnet**, daß der bei vorgeschobenem Düsenkegel (3) mit der Schließkante (34) des Düsenmundstückes (2) zusammenwirkende Bereich des Düsenkegels als zylindrischer Abschnitt (33) ausgebildet ist.

3. Vorrichtung nach Anspruch 2, **dadurch gekennzeichnet**, daß der zylindrische Abschnitt (33) nach vorne hin in einen konischen Abschnitt (32) des Düsenkegels (3) übergeht, der zu dem seitlich daneben verlaufenden Abschnitt des Düsenmundstückes (2) unter gleichem Neigungswinkel parallel ist.

4. Vorrichtung nach Anspruch 2 oder 3, **dadurch gekennzeichnet**, daß die Länge des zylindrischen Abschnittes (33) in etwa gleich der Hubhöhe des Düsenkegels (3) zwischen Offenstellung und Geschlossenstellung ist.

5. Vorrichtung nach Anspruch 2, 3 oder 4, **dadurch gekennzeichnet**, daß eine an sich bekannte Kunststoff zuführende Fördereinrichtung mit einer Ladenden Schnecke (46) und einem pressenden Kolben (43) vorgesehen ist.

6. Vorrichtung nach einem der vorhergehenden Ansprüche, **dadurch gekennzeichnet**, daß die geschlossene Blasform von der Düsenöffnung (10) einen zumindest geringen Abstand aufweist.

7. Vorrichtung nach einem der vorhergehenden Ansprüche, **dadurch gekennzeichnet**, daß die Steuereinrichtung für eine langsame Abnahme der Kunststoffzufuhr in Relation zur Abzugsgeschwindigkeit bzw. für eine langsame Zunahme der Abzugsgeschwindigkeit in Relation zur Kunststoffzufuhr während des Ziehens des Rohrabschnittes ausgelegt ist.

8. Vorrichtung nach einem der vorhergehenden Ansprüche, **dadurch gekennzeichnet**, daß ein die Blasluft zulassendes Ventil und ein die Düsenöffnung abscherend schließendes Ventil gleichzeitig angesteuert sind.

## Claims

1. An apparatus for the manufacture of a hollow body of thermoplastic synthetic material with a head piece (28) moulded by injection moulding and a body part (30) moulded by blowing a tube portion (29) connected to the said head piece as one piece, wherein an annular nozzle (1) has a nozzle cone (3) in a nozzle orifice (2) which may be displaced to and fro and which with the nozzle orifice (2) defines a nozzle opening (10) in the shape of an annular passage, wherein a drawing device (13) with a recess (16) for the head piece (28) is arranged for displacement to and fro in the axial direction relative to the annular nozzle (1), wherein the blowing mould parts (19) of a multiple-part blowing mould may be moved sideways to and fro and wherein a blowing device (8) inflates the drawn tube portion (29) with the blowing mould closed, a control means being provided and the nozzle opening (10) being controllable so as to be variable in throughflow and closable, characterised in that the closed blowing mould leaves the nozzle opening (10) free for the passage of the tube portion (29) into the blowing mould, in that the control means is designed for expanding the extruded tube portion (29) by means of the drawing device (13) drawing it off while the supply of synthetic material is shut off or interrupted, and in that the control means is designed in such a way that the nozzle opening (10) is controlled so as to be opened in the open position until commencement of the blowing process and after commencement of the blowing process, with the hollow body under pressure, is controlled so as to be closed, thereby performing a shearing action.

2. An apparatus according to claim 1, characterised in that the region of the nozzle cone cooperating with the closing edge (34) of the nozzle orifice (2) when the nozzle cone (3) is pushed forwards is designed as a cylindrical portion (33).

3. An apparatus according to claim 2, characterised in that the cylindrical portion (33) extends forwardly into a conical portion (32) of the nozzle cone (3) which is parallel at the same angle of inclination to the portion of the nozzle orifice (2) extending laterally adjacent to it.

4. An apparatus according to claim 2 or 3, characterised in that the length of the cylindrical portion (33) is approximately equal to the length of stroke of the nozzle cone (3) between the open position and the closed position.

5. An apparatus according to claim 2, 3 or 4, characterised in that a conveyor means, known per se and supplying synthetic material and comprising a loading screw (46) and a pressing piston (43), is provided.

6. An apparatus according to one of the preceding claims, characterised in that the closed blowing mould is at least a small distance away from the nozzle opening (10).

7. An apparatus according to one of the preceding claims, characterised in that the control means is designed for the slow decrease in the supply of synthetic material in relation to the drawing speed or for the slow increase in the drawing speed in relation to the supply of synthetic material while the tube portion is being drawn.

8. An apparatus according to one of the preceding claims, characterised in that a valve admitting the blowing air and a valve closing the nozzle opening so it performs a shearing action are controlled simultaneously.

## Revendications

1. Appareil pour la production d'un corps creux en matière plastique thermoplastique comprenant une pièce de tête (28) formée par moulage par injection et une partie de corps (39) formée par soufflage d'un tronçon tubulaire (29) qui s'y raccorde d'une seule pièce, appareil dans lequel une filière annulaire (1) comporte une torpille de filière (3) déplaçable en va-et-vient dans une pièce d'embouchure (2), ladite torpille de filière délimitant avec la pièce d'embouchure (2) une ouverture de filière (10) en forme de fente annulaire, un dispositif d'extraction (13) doté d'un évidement (16) pour la partie de tête (28) étant agencé mobile en va-et-vient en direction axiale par rapport à la filière annulaire (1), les parties (19) d'un moule de soufflage en plusieurs parties étant déplaçables en va-et-vient latéralement, et un dispositif de soufflage (8) soufflant le tronçon de tube étiré (29) lorsque le moule de soufflage est fermé, l'appareil comprenant un dispositif de commande et l'ouverture de filière (10) pouvant être commandée de manière variable quant au débit qui la traverse et de façon à pouvoir être refermée, caractérisé en ce que le moule de soufflage fermé laisse l'ouverture de filière (10) libre pour le passage du tronçon de tube (29) dans le moule de soufflage, en ce que le dispositif de commande est réalisé en vue d'un allongement du tronçon de tube extrudé (29) au moyen du dispositif d'extraction (13) tandis que l'alimentation en matière plastique est étranglée ou interrompue, et en ce que le dispositif de commande est conçu de telle manière que l'ouverture de filière (10) est commandée en position ouverte jusqu'au début de l'opération de soufflage, et qu'elle est commandée à la fermeture et en cisaillement après le début de l'opération de soufflage tandis que le corps creux est sous pression.

2. Appareil selon la revendication 1, caractérisé en ce que la région de la torpille de filière, qui coopère avec l'arête de fermeture (34) de la pièce d'embouchure (2) lorsque la torpille de filière (3) est avancée, est réalisée sous la forme d'un tronçon cylindrique (33).

3. Appareil selon la revendication 2, caractérisé en ce que le tronçon cylindrique (33) se transforme vers l'avant dans un tronçon conique (32) de la torpille de filière (3), qui est parallèle au tronçon de la pièce d'embouchure (2) qui s'étend latéralement à côté de celle-ci, sous le même angle d'inclinaison.

4. Appareil selon l'une ou l'autre des revendications 2 et 3, caractérisé en ce que la longueur du tronçon cylindrique (33) est à peu près égale à la hauteur de course de la torpille de filière (3) entre la position ouverte et la position fermée.

5. Appareil selon l'une des revendications 2, 3 ou 4, caractérisé en ce qu'il est prévu un dispositif d'alimentation connu en soi pour l'alimentation de matière plastique, comprenant une vis d'alimentation (46) et un piston de compression (43).

6. Appareil selon l'une des revendications précédentes, caractérisé en ce que le moule de soufflage fermé est situé au moins à une faible distance de l'ouverture de filière (10).

7. Appareil selon l'une des revendications précédentes, caractérisé en ce que le dispositif de commande est conçu pour une diminution lente de l'alimentation en matière plastique en relation avec la vitesse d'extraction, ou pour une augmentation lente de la vitesse d'extraction en relation avec l'alimentation en matière plastique pendant l'étirage du tronçon de tube.

8. Appareil selon l'une des revendications précédentes, caractérisé en ce que l'on pilote simultanément une valve qui laisse passer l'air de soufflage et une valve qui ferme en cisaillement l'ouverture de filière.
